# NEUE EUROPÄISCHE PATENTSCHRIFT

(11) **EP 0 269 778 B2**
(45) Veröffentlichungstag und Bekanntmachung des Hinweises auf die Entscheidung über den Einspruch: **17.08.1994**
(45) Hinweis auf die Patenterteilung: 27.12.1990
(21) Anmeldenummer: 87103000.3
(22) Anmeldetag: 03.03.1987
(51) Int. Cl.: H01B 7/28

(54) **Verfahren zur Herstellung einer quellfähigen Kabelbandage**
Process for manufacturing a swellable cable wrapping
Procédé pour la fabrication d'un bandage gonflant pour câble

(30) Priorität: 21.11.1986 DE 3639895
(43) Veröffentlichungstag der Anmeldung: 08.06.1988
(73) Patentinhaber: Firma Carl Freudenberg, 69469 Weinheim (DE)
(72) Erfinder: Buchwald, Holger, D-6944 Hemsbach (DE); Schaffert, Ingrid, D-6945 Hirschberg-Leutershausen (DE)

(56) Entgegenhaltungen:
- EP-A- 0 022 745
- EP-A- 0 141 931
- EP-A- 0 188 959
- DE-A- 2 007 163
- FR-A- 2 500 203
- FR-A- 2 538 941
- GB-A- 2 167 776
- DIN 61210,Jan. 1982

## Beschreibung

Die Erfindung betrifft ein Verfahren zur Herstellung einer Kabelbandage aus Vliesstoff, deren Aufgabe darin besteht, in einem elektrischen Kabel die Hohlräume zwischen Kabelmantel und Kabelseele längswasserdicht auszugestalten. Hierzu enthält die Bandage Partikeln eines bei Wasserdurchtritt stark quellenden, jedoch wasserunlöslichen Materials, im folgenden auch "Superabsorber" genannt. Das Quellen einer solchen, der Feuchtigkeit ausgesetzten Bandage führt zum Verschließen der Räume zwischen Kabel und Seele und gegebenenfalls den Abschirmdrähten, so daß eine Ausbreitung des Wassers in Kabellängsrichtung verhindert wird und der Schaden auf einen kleinen Längenbereich beschränkt bleibt.

Das quellfähige Puder besteht in der Regel aus vernetztem Natriumsalz einer Polyacrylsäure.

Ohne eine solche Quellbandage entstehen Kurzschlüsse beim Eindringen von Feuchtigkeit in elektrischen Hochspannungskabeln oder Fernmeldekabeln durch beim Verlegen oft unvermeidliche Beschädigungen des Mantels (Abscherung, Abknickung). Es kann dabei geschehen, daß in mehradrigen Kabeln eine Papierisolierung durchnäßt wird oder eingedrungenes Wasser sich zwischen Kabelseele und - mantel und zwischen den Adern selbst in Längsrichtung des Kabels ausbreitet. Durch Isolationsfehler können dann diese Adern kurzschlußartig über das Wasser im Bereich von Verbindungen und Abzweigungen an Erdpotential zu liegen kommen.

Um diese Längsausbreitung des Wassers aufzuhalten, ist dessen möglichst rasche Aufnahme durch die Bandage erforderlich.

Bei Mittel- und Hochspannungskabeln kommt einer Bandage ferner die Aufgabe zu, mittels einer durch Ruß erzeugten, halbleitenden Eigenschaft einen elektrischen Kontakt zwischen einer im Kabel vorhandenen, halbleitenden Zwischenschicht aus mit Ruß gefülltem Polyethylen und der metallisch leitenden Abschirmung zu gewährleisten. Der Kontakt muß auch bei Expansion bzw. Kontraktion des Kabels infolge starker Erwärmung oder Abkühlung bestehen bleiben. Solche Effekte entstehen in diesen Kabeln durch induktiv erzeugte Temperaturschwankungen von 80 bis über 200°C.

Die halbleitende Zwischenschicht soll Koronaentladungen innerhalb des Kabels infolge ungleichmäßiger Potentialverteilungen auf der Isolierung verhindern. Neben den genannten thermischen Effekten kann wegen ihrer Sprödigkeit die halbleitende Schicht Sprünge und Risse beim Biegen des Kabels bekommen, was zu unerwünschten lonisationen führt. Auch in diesen Fällen soll die Bandage elektrisch überbrückend wirken und gewährleisten, daß die Zwischenschicht kein anderes elektrisches Potential aufweist als die metallische Abschirmung.

Die Bandagen werden bei der Konfektionierung der genannten Kabel unter hoher Zugspannung, mit Steigung oder längs auf das Kabel äußerst straff aufgewickelt. Die Breite eines Bandes beträgt häufig 1 bis 15 cm, jedoch sind beliebige Sonderkonfektionen denkbar. Auch die Dicke kann von 0,3 bis 1 mm variieren, ohne für Spezialfälle kleinere oder größere Werte, z. B. für minderwertige Kabelqualitäten mit größeren inneren Hohlräumen, auszuschließen. Auch das Auftragen von mehr als einer Bandagenlage wurde bereits praktiziert. Häufig benötigte Flächengewichte liegen zwischen 90 und 200 g/m².

Aus der DE-PS 1 790 202 ist eine Kabelbandage bekannt geworden, bei der das Superabsorber-Pulver in eine offenporige, hydrophobe Schaumstoffmatrix eingebettet ist.

Diese Ausgestaltung gewährleistet eine gleichmäßige Fixierung der Absorber-Partikeln auf der Bandage. Jedoch wird die Zeit bis zum Aufquellen des Puders durch dessen nahezu allseitige Umschließung mit dem wasserundurchlässigen Schaumstoff nachteilig verzögert. Aus dem gleichen Grunde wird eine drastische Volumenzunahme der Absorber-Partikeln verhindert. Da der Wasserdurchtritt durch den offenporigen Schaumstoff durch Oberflächenspannungs-Effekte zusätzlich erschwert wird, dauert es insgesamt zu lange, bis die Masse reagiert und den Bereich des Wassereintritts quellend verstopft: In diesem Zeitintervall dringt das Wasser ungehindert in Längsrichtung im Innern des Kabels vor. Ein weiterer Nachteil besteht darin, daß es technisch sehr schwierig ist, einen solchen Schaumstoff elektrisch halbleitend auszugestalten.

Demzufolge sind Quellbandagen im Handel, bei denen sich der Superabsorber auf einer relativ dichten, für ihn undurchdringbaren Vliesstoffschicht befindet, welche gegebenenfalls mit Ruß imprägniert ist. Abgedeckt ist das Puder mit einem sehr dünnen, gegebenenfalls auch mit Ruß versetzten Vliesstoff. Der Schichtenverbund ist häufig mit einem wasserunlöslichen Bindemittel verfestigt.

Diese Ausführung gewährleistet, bei zwingend vorgegebener Wickelrichtung mit der dünnen Vliesschicht nach außen, im Schadensfall den notwendigen, sofortigen Wasserdurchtritt zum Quellpuder, allerdings nur von einer Seite, nämlich durch das Abdeckvlies hindurch. Daher setzt das Quellen nur mit erheblicher Verzögerung ein; die Bandage erreicht nur ein geringes Endvolumen. Die absorbierenden Partikeln sind derart fest zwischen den Vliesstoffschichten eingebunden, daß es erst eines ausreichenden Quelldruckes und damit erheblicher Zeit bedarf, bis die Faserbindungen des Deckvliesstoffes zerstört sind und ein weiteres räumliches Ausdehnen des Quellmittels möglich wird.

Den auf der anderen Seite befindlichen Basisvliesstoff vermag das Quellpuder überhaupt nicht aufzubrechen. Weitere Nachteile sind das beträchtliche Auspulvern des Superabsorbers durch das dünne Deckvlies bei der Konfektionierung und Montage, die vorgeschriebene Wickelrichtung mit dem Deckvlies nach außen, die hohe Gefahr der Beschädigung des empfindlichen, dünnen Deckvlieses sowie die Unterbrechung der elektrischen Leitfähigkeit im Querschnitt der Bandage durch die Quellpuderschicht, also der zu hohe Flächendurchgangswiderstand, der mehr als 10 000 Q. cm ² beträgt. Von Kabelherstellern werden im allgemeinen Werte -- 3 000 Q. cm² gefordert.

Der Erfindung liegt die Aufgabe zugrunde, ein Verfahren anzugeben, bei dem die Herstellung der Bandagen ohne weitere Maßnahmen von rußfreien auf rußhaltige Produkte umgestellt werden kann. Des weiteren soll gezeigt werden, wie vorzugehen ist, damitdie fertige Kabelbandage keinen Schichtenaufbau mehr zeigt und somit bei Zugabe eines rußhaltigen Bindemittels die erforderlichen Flächendurchgangswiderstände aufweist.

Diese Aufgabe wird durch die Merkmale des Anspruchs 1 gelöst, wobei man ein Faservlies mit einem Flächengewicht von mindestens 20 g/m², zusammengesetzt aus 95 bis 75 Gew.-% Viskose und 5 bis 25 Gew.-% Polyvinylalkohol-Fasern, die erst ab 80°C in Wasser löslich sind, mit 20 bis 40 g/m² eines nicht wasserlöslichen Quellpuders einseitig beschichtet und dieses mit einem weiteren Faservlies gleicher Zusammensetzung und gleichen Flächengewichts wie das erstgenannte Vlies abdeckt, anschließend alle Schichten mit einem in Wasser seine Wirkung verlierenden, aufgeschäumten, 3 bis 20%igen, wäßrigen Bindemittel homogen von beiden Seiten durchtränkt, wobei eine solche, in Vorversuchen ermittelte Menge an Bindemittel aufgebracht wird, daß das Quellpuder gerade noch nicht vom Wasser aktiviert wird, und anschließend den Verbund auf einem Bandtrockner mit Heißluft von 130 bis 160°C beaufschlagt, wobei man die Polyvinylalkohol-Fasern an ihren Oberflächen anlöst und zudem durch deren Schrumpfen die beiden Vlieslagen im Querschnitt ineinander übergehen läßt und so zu einer Einheit verfestigt.

Die quellfähigen Partikeln sollen Korngrößen von 100 bis 500 µm besitzen, um einerseits ein Stauben durch zu feine Teilchen zu vermeiden und um andererseits zu verhindern, daß zu grobe Teilchen eine ungleichmäßige Superabsorber-Verteilung bewirken.

Die verwendeten Faservliese sollen je ein Flächengewicht von 20 g/m² nicht unterschreiten, da ansonsten ein Durchpudern feinerer Superabsorber-Partikeln nicht mehr ausgeschlossen werden kann, selbst wenn bevorzugte Teilchengrößen von 100 bis 500 µm eingesetzt werden. Im Rahmen der vorgegebenen Parameter reicht der Einsatz von 20 bis 40 g/m² Quellpuder in jedem Fall aus.

Das Bindemittel wird, gegebenenfalls unter Zusatz von Schaumhilfsmitteln, aufgeschäumt. Bei der vorzugsweisen Verwendung eines leicht wasserlöslichen Polyvinylalkohols in 5%iger wäßriger Lösung kann auf solche Hilfsmittel verzichtet werden; diese Lösung wird einfach durch Einschlagen von Luft aufgeschäumt.

Die notwendige Bindemittelmenge muß durch Vorversuche ermittelt werden, wobei gemessen wird, bis zu welcher Obergrenze ein beidseitiges Imprägnieren der Vliese die Superabsorber-Partikeln gerade noch nicht aufquellen läßt.

Diese Vorversuche erfordern jedoch keinen nennenswerten zeitlichen und technischen Aufwand. Die Raumdichte des Bindemittels wird durch das Schäumen auf ein Drittel bis ein Viertel der ursprünglichen Dichte reduziert. Dosiert wird durch die Breite des Spaltes von 0,4 bis 0,9 mm zwischen zwei Walzen, wo der Verbund im Imprägnierwerk hindurchgeführt wird. Dieser Spalt sorgt auch für die vollständige Durchdringung der Vliese mit dem Bindemittel.

Der Vorteil des erfindungsgemäßen Verfahrens liegt darin, daß ohne Unterbrechung der laufenden Produktion bei geringem Ausschuß rasch von der Herstellung einer rußfreien Bandage auf eine rußhaltige umgestellt werden kann, indem einfach die mit Ruß versetzte Bindemittelvariante eingewechselt, auf gleiche Weise verschäumt und aufgetragen wird. Dabei wird in das Bindemittel vor dem Aufschäumen eine solche Menge Ruß eindispergiert, daß die fertige Bandage einen Flächendurchgangswiderstand Z 3 000 Ω · cm² aufweist.

Während der Trocknungsphase werden die Polyvinylalkohol-Fasern ab ca. 50°C an ihren Oberflächen angelöst, sie schrumpfen und verbinden dadurch oberhalb 110°C die Vliesschichten derart innig miteinander, daß im Querschnitt des fertigen Produktes Schichtengrenzen nicht mehr festgestellt werden können. Ein Trennen der Vlieslagen durch Bindemittelmigration im Fertigprodukt wird somit ausgeschlossen; auch sind die Superabsorber-Partikeln in gesamten Querschnitt der Bandage vorhanden. Eine den Flächendurchgangswiderstand erhöhende, definierte Mittelschicht aus Superabsorber-Partikeln liegt nicht mehr vor.

Im Interesse einer Synthese von Längsfestigkeit, Quellpuder-Haltefähigkeit und Materialdicke wurde es als vorteilhaft gefunden, Fasern einzusetzen, welche einen Titer von 1,7 dtex und eine Länge von 38 mm besitzen.

Durch die Menge der Polyvinylalkohol-Fasern kann im Rahmen der anspruchsgemäßen Grenzen von 5 bis 25 Gew.-% Einfluß auf die Materialdicke genommen werden, so daß sowohl voluminöse als auch sehr dünne Bandagen auf die gleiche Weise einfach herstellbar sind.

Erforderlichenfalls kann die fertige Bandage noch unter Druck kalt kalandriert werden, um eine weitere Dickenreduzierung zu bewirken. Dieser Verfahrensschritt ist jedoch nicht Gegenstand dervorliegenden Erfindung.

Die Bandage besitzt aufgrund ihrer Faserorientierung, der geschrumpften Polyvinylalkohol-Fasern sowie wegen des homogen verteilten Bindemittels eine Zugfestigkeit in Längsrichtung von 150 bis 200 N/5cm, wodurch sie zerstörungsfrei gewickelt werden kann. Die in der Überzahl vorhandenen Viskose-fasern gehen eine gute Verbindung mit dem Bindemittel und den Polyvinylalkohol-Fasern ein. Beim Schneiden, Transportieren und Verarbeiten tritt keine nennenswerte Menge des Quellpulvers aus, welches fest im Gefüge des mit dem Bindemittel und über die Polyvinylalkohol-Fasern verbundenen Vliesstoffes verankert ist.

Die bedeutendste vorteilhafte Eigenschaft der Bandage besteht in ihrer sofortigen und dabei nahezu vollständigen Quellfähigkeit bei Wassereintritt in ein Kabel. In nicht eingebautem Zustand quillt sie innerhalb von einer Minute zu mindestens 90% ihrer erreichbaren Dicke auf und macht somit in einem Kabel dieses in jedem Falle rasch absolut längswasserdicht. Ermöglicht wird diese Eigenschaft zum einen durch die auf beiden Seiten der Bandage gleich gute Benetzbarkeit der mehrheitlich vorliegenden hydrophilen Viskose-Fasern zu den Quellpartikeln hin.

Besonders wesentlich ist dabei jedoch zum anderen die synergistische Wirkung der Polyvinylalkohol-Fasern, die sich zwar in Wasser bei den Einsatzbedingungen im Kabel nicht auflösen, jedoch unter Beibehaltung ihrer gekräuselten Faserstruktur anquellen und abei ihre Bindefähigkeit verlieren, und des Bindemittels, welches ebenfalls unter Wassereinwirkung seine Klebeeigenschaften einbüßt. Das eintretende Wasser löst also die innere Festigkeit der den Superabsorber fixierenden Matrix aus mit Bindefasern und Bindemittel verfestigtem Viskosevliesstoff sofort auf; es entsteht eine Masse aus losen Viskosefasern, nicht mehr bindefähigen, ebenfalls losen Polyvinylalkohol-Fasern und Superabsorber-Partikein, was erstens den Wasserzutritt zum Quellmittel weiter erleichtert und wodurch zweitens diesem Quellmittel im Moment des einsetzenden Quellvorganges keinerlei wesentlicher Widerstand mehr entgegengesetzt wird. Es resultiert ein sofortiges und höchstmögliches Quellen der Bandage bereits im Bereich des Wassereintritts. Das beschädigte Kabel ist sofort längswasserdicht versiegelt.

Es wurde festgestellt, daß ein frei hängender Streifen der Bandage bei Wassereinwirkung trotz der erheblichen und sofort einsetzenden Quellung seine Raumform (quadratische Säule) beibehält und selbsttragend bleibt, ohne daß Quellpuder-Gel aus der nunmehr losen Fasermatrix austritt. Diese wird durch die Kräuselung der Viskose- und Polyvinylalkohol-Fasern immer noch ausreichend zusammengehalten.

### Beispiel 1:

Ein Faservlies von 35 g/m² aus 90 Gew.-% Viskose- und 10 Gew.-% erst in Wasser über 80°C löslichen Polyvinylalkohol-Fasern wird mit 30 g/m² eines Superabsorbers aus vernetztem Natriumsalz der Polyacrylsäure einseitig bestreut und diese Streuschicht mit einem Faservlies gleicher Zusammensetzung und gleichen Gewichts wie das Trägervlies abgedeckt. Alle Fasern haben einen Titer von 1,7 dtex bei einer Länge von 38 mm. Der Absorber weist Korngrößen um 350 µm auf.

Dieser Verbund wird mit einer 5%igen wäßrigen, durch Einschlagen von Luft aufgeschäumten Polyvinylalkohol-Binde-mittellösung homogen durchtränkt: Durch Vorversuche wurde ermittelt, daß eine Lösungsmenge von bis zu 400 g/m² den Superabsorber noch nicht aktiviert. Die Bindemittellösung ist durch die eingebrachte Luft auf ein Drittel ihrer ursprünglichen räumlichen Dichte reduziert; der Walzenspalt beträgt 0,6 mm. Die Naßaufnahme beim Imprägnieren beläuft sich auf ca. 400%, bezogen auf das Trockengewicht des gesamten Verbundes. Nach dem Durchlaufen durch das Imprägnierwerk wird das Flächengebilde durch Beaufschlagen mit 150°C heißer Luft getrocknet und erhält dabei seine Verfestigung:

Die Polyvinylalkohol-Fasern werden an ihren Oberflächen angelöst und schrumpfen, das Wasser der Bindemittellösung entweicht. Durch das Schrumpfen der Polyvinylalkohol-Fasern zieht sich der Vliesstoff in Querschnittsrichtung zu einer Einheit zusammen, und mit dem Abkühlen entsteht eine einschichtig erscheinende Bandage mit einer Längs-Zugfestigkeit von 180 N/5cm. Quellpuder rieselt auch beim Biegen der Bandage nicht aus.

Zur Prüfung der Quellfähigkeit wird eine horizontal liegende, streifenförmige Probe mit 2,5 g/cm² durch einen Stempel belastet und im Überschuß mit destilliertem Wasser an einer vorbestimmten Stelle beaufschlagt. Die Zeit und die Höhenverschiebung des Stempels während der Quellung werden gemessen. Bereits nach einer Minute sind über 90% der gesamten Quellhöhe erreicht. Der Faserverbund hat keine klebend bindende Wirkung mehr, dennoch, ist das gequollene Band weiterhin selbsttragend infolge der mechanischen Verbindung der sich über den gesamten Querschnitt der Bandage erstreckenden, gekräuselten Fasern, Nunmehr gelförmiges Quellpuder tritt dabei nicht in nennenswerten Mengen aus dem nassen Faserverbund aus.

### Beispiel 2:

Bei sonst gleichen Herstellungsparametern und bei Einsatz gleicher Materialien wie in Beispiel 1 wird ein Bindemittelschaum verwendet, in den Polyvinylalkohol und Ruß im Gewichtsverhältnis 1 : 1 (trocken) gemischt sind. Ansonsten wird wie in Beispiel 1 gearbeitet.

Der Flächendurchgangswiderstand der fertigen Bandage beträgt 2 200 Ω·cm², der Oberflächenwiderstand jeweils 500 Q.

## Patentansprüche

1. Verfahren zur Herstellung einer quellfähigen Kabelbandage aus Vliesstoff, dadurch gekennzeichnet, daß man ein Faservlies mit einem Flächengewicht von mindestens 20 g/m², zusammengesetzt aus 95 bis 75 Gew.-% Viskose und 5 bis 25 Gew.-% Polyvinylalkohol-Fasern, die erst ab 80°C in Wasser löslich sind, mit 20 bis 40 g/m² eines nicht wasserlöslichen Quellpuders einseitig beschichtet und dieses mit einem weiteren Faservlies gleicher Zusammensetzung und gleichen Flächengewichts wie das erstgenannte Vlies abdeckt, daß man anschließend alle Schichten mit einem in Wasser seine Wirkung verlierenden, aufgeschäumten, 3 bis 20%igen, wäßrigen Bindemittel homogen von beiden Seiten durchtränkt, wobei eine solche, in Vorversuchen ermittelte Menge an Bindemittel aufgebracht wird, daß das Quellpuder gerade noch nicht vom Wasser aktiviert wird, und daß man anschließend den Verbund auf einem Bandtrockner mit Heißluft von 130 bis 160°C beaufschlagt, wobei man die Polyvinylalkohol-Fasern an ihren Oberflächen anlöst und zudem durch deren Schrumpfen die beiden Vlieslagen im Querschnitt ineinander übergehen läßt und so zu einer Einheit verfestigt.

2. Verfahren nach Anspruch 1, dadurch gekennzeichnet, daß man in das Bindemittel vor dem Aufschäumen eine solche Menge Ruß eindispergiert, daß die fertige Bandage einen Flächendurchgangswiderstand Z 3 000 Q. cm ² aufweist.

3. Verfahren nach Anspruch 1 oder 2, dadurch gekennzeichnet, daß man als Bindemittel leicht wasserlöslichen Polyvinylalkohol als 5%ige wäßrige Lösung verwendet.

4. Verfahren nach einem der Ansprüche 1 bis 3, dadurch gekennzeichnet, daß man Quellpuder mit einer Korngröße von 100 bis 500 µm verwendet.

5. Verfahren nach einem der Ansprüche 1 bis 4, dadurch gekennzeichnet, daß man Fasern mit einem Titer von 1,7 dtex und einer Länge von 38 mm einsetzt.

## Claims

1. A process for producing a swellable cable band of nonwoven material, characterized in that a fibre nonwoven having a weight per unit area of at least 20 g/m² and composed of 95 to 75% by weight of viscose fibres and 5 to 25% by weight of polyvinyl alcohol fibres soluble in water only at 80°C and above, is coated on one side with 20 to 40 g/m² of a water-insoluble swelling powder and the latter is covered with a furtherfibre nonwoven of the same composition and the same weight per unit area as the first-mentioned nonwoven, in that subsequently all the layers are impregnated homogeneously from both sides with a foamed, 3 to 20% aqueous binder which loses its action in water, such a quantity, determined in preceding experiments, of binder being applied that the swelling powder is just not yet activated by the water, and in that the composite is then subjected on a belt drier to hot air of 130 to 160°C, the polyvinyl alcohol fibres being incipiently dissolved on their surfaces and additionally, due to the shrinkage thereof, the two nonwoven plies being caused to merge in cross-section with one another and thus being consolidated to give a unit.

2. A process according to claim 1, characterized in that, before foaming, such a quantity of carbon black is dispersed into the binder that the finished band has a volume resistance per unit area of 3,000 Q x cm².

3. A process according to claim 1 or 2, characterized in that a readily water-soluble polyvinyl alcohol as a 5% aqueous solution is used as the binder.

4. A process according to any of claims 1 to 3, characterized in that a swelling powder having a particle size from 100 to 500 µm is used.

5. A process according to any of claims 1 to 4, characterized in that fibres having a count of 1.7 dtex and a length of 38 mm are employed.

## Revendications

1. Procédé de production de garniture de câble gonflante en nappe de fibres, caractérisé en ce que l'on enduit sur une face une nappe de fibres ayant un poids unitaire d'au moins 20 g/m² et composée de 95 à 75% en poids de fibres de viscose et de 5 à 25% en poids de fibres d'alcool polyvinylique qui sont solubles dans l'eau à partir de 80°C, avec 20 à 40 g/m² d'une poudre gonflante non soluble dans l'eau et que l'on recouvre celle-ci d'une autre nappe de fibres de même composition et de même poids unitaire que la nappe précitée, en ce que l'on imprègne ensuite toutes les couches de manière homogène et des deux côtés avec un liant aqueux de 3 à 20% ayant gonflé et perdant son efficacité dans l'eau, en appliquant une quantité de liant déterminée au cours d'essais préliminaires, en ce que la poudre gonflante n'est pas encore activée par l'eau et que l'on soumet ensuite l'ensemble à l'action de l'air chauffé de 130 à 160°C sur un sécheur à bande, tandis que les fibres d'alcool polyvinylique se dissolvent à leur surface et provoquent l'assemblage des deux nappes de fibres dans leurs sections par suite de leur rétrécissement, de manière à les consolider en un seul ensemble.

2. Procédé selon la revendication 1, caractérisé en ce que l'on disperse dans le liant, avant le moussage, une quantité de suie telle que la garniture terminée présente une résistance de passage superficielle < 3.000 ohm cm².

3. Procédé selon la revendication 1 ou 2, caractérisé en ce que l'on utilise comme liant un alcool polyvinylique facilement soluble dans l'eau, sous forme d'une solution aqueuse à 5%.

4. Procédé selon l'une des revendications 1 à 3, caractérisé en ce que l'on utilise une poudre gonflante ayant une granulométrie de 100 à 500 µm.

5. Procédé selon l'une des revendications 1 à 4, caractérisé en ce que l'on utilise des fibres ayant un titre de 1,7 dtex et une longueur de 38 mm.
